# EUROPEAN PATENT SPECIFICATION

(11) **EP 4 391 294 B1**
(45) Date of publication and mention of the grant of the patent: **10.06.2026**
(21) Application number: 24168999.1
(22) Date of filing: 23.02.2022
(51) Int. Cl.: H02J 9/00

(54) **A METHOD OF OPERATING A WIRELESS LOGGER DEVICE**
VERFAHREN ZUM BETRIEB EINER DRAHTLOSEN LOGGER-VORRICHTUNG
PROCÉDÉ DE FONCTIONNEMENT D'UN DISPOSITIF ENREGISTREUR SANS FIL

(43) Date of publication of application: 26.06.2024
(62) Divisional of application: 22158318.0
(73) Proprietor: Controlant hf., 101 Reykjavik (IS)
(72) Inventor: BRYNJULFSSON, Erlingur, 201 Kopavogur (IS)
(74) Representative: Inspicos P/S

(56) References cited:
- EP-A1- 3 588 143
- WO-A1-2011/022412
- US-A1- 2006 023 679
- US-A1- 2016 116 310
- US-A1- 2017 193 443
- US-A1- 2021 328 451
- US-B1- 10 629 067

## Description

### FIELD OF THE INVENTION

The present invention relates to a method of operating a wireless logger device where the logger device is configured to monitor an environmental related parameter of an asset while the asset is transported from an origin location to a destination location.

### BACKGROUND OF THE INVENTION

With the expansion and growth of global sourcing in a supply chain, more prevalent interest has been placed on automatic electronic time and monitoring of environment related parameters to increase food and drug safety and improve food defense systems throughout all areas of production, processing, storage and transportation and operations. Food and drug require proper handling of environment related parameters such as temperature during transport in the supply chain to assure shelf quality, longevity, and safety.

Logger devices are electronic monitoring devices commonly used for these purposes, namely, to be associated to an asset to automatically monitor and record various environmental related parameters of the asset throughout a supply chain, such as temperature, humidity, acceleration, and air pressure, over time. A recent example of importance of such logger devices is the temperature monitoring of the COVID-19 vaccines, which is a key critical monitoring parameter.

Logger devices today are transported from the destination location after use to service center, where they are returned and charged and in some instances are re-calibrated, and then transported back to an origin location. The path from the destination location to the service center is not important for the customer because the monitoring of the asset is completed. Also, the transport from the service center to the origin location is often relative short and the logger devices are in a low power mode during the transport and therefore this path is also not critical. US20170193443 discloses method of operating a mobile transceiver having a processor, and a wireless transceiver and a satellite receiver each coupled to the processor. A message with an ID of a mobile transceiver is send to an asset tracking service. The message includes an instruction for the mobile transceiver to apply a selected travel mode. The mobile transceiver is woken up in response to an alarm defined for the current travel mode.

US20160116310 discloses a wireless active logger for measuring and storing information on environmental conditions during transportation. An internal low power module continuously lags data from the sensor and sends the data to a centralized system through the external module, when the external module is in communication with a wireless network. WO2011/022412 discloses a computer-implemented method where tracking data for an asset is received from a tracking device coupled to the asset. The tracking data includes a location of the asset and a timestamp corresponding to the location. A hidden Markov Model is used for assessing a shipping context of the asset based on the received tracking data, and it is determined if a dynamic behavior of the tracking device is to be adjusted based on the shipping context. At the origin location the logger devices are stored until the transport starts from the origin location to the destination location. During this time, the logger devices remain in low power mode, but "wake-up" with regular time intervals, commonly every 12 hours, to check with external data processing device, which may be seen as a cloud platform, if an asset order is in place or not. If an asset order is in place, the logger devices receives and stores the asset details contained in the asset order, such as what to monitor, what boundaries are allowed, the origin and destination locations etc.

This wake-up frequency at the origin location prior to the transport is amongst others to ensure if e.g. an operator when preparing the logger device for a transport forgets to manually start a logger device and the logger device together with the asset is in transport, that this can be detected vie said regular wake-up.

A common problem today is that the storing time at the origin location (which can be a warehouse) until the actual transport in the supply chain starts can range from being several hours, to several days, weeks or even months. During this time, the logger devices wake-up with fixed frequency, e.g. said 12 hours, where the modem of the logger device is tuned from being in a low-power mode to a high-power mode so that it can communicate with said external data processing device via a cellular network. This operation is energy consuming and after several months results in a significant power use.

Many customers have as a requirement that the charging of the logger devices when the actual transport starts are not below 90% to be able to ensure sufficient charge during the supply chain monitoring. This means that all logger devices below this value are not allowed to enter the transport and instead need to be re-charged. This is both tedious and time consuming because these logger devices must be shipped back to the service center for recharging and then be shipped back to the origin location.

Therefore, it is highly important that the battery usage during this critical storage time is minimized.

### SUMMARY OF THE INVENTION

It is an object of embodiments of the present disclosure to provide a method that minimizes energy consumption of power sources such as batteries used in powering wireless logger devices, in particularly when the logger devices are not yet in a transport mode.

In general, the disclosure preferably seeks to mitigate, alleviate or eliminate one or more of the above-mentioned disadvantages of the prior art singly or in any combination. In particular, it may be seen as an object of embodiments of the present disclosure to provide a method for improving power source lifetime of the logger device that solves the above-mentioned problems, or other problems.

To better address one or more of these concerns, in a first aspect of the disclosure a method is provided for operating a wireless logger device where the logger device is configured to monitor an environmental related parameter of an asset while the asset is transported from an origin location to a destination location, where the logger device comprises:
- a power source for powering the logger device,
- a storage medium,
- a sensing device for sensing an environmental related parameter of the asset,
- a communication module,
- a processor for operating the power source, the storage medium, the sensing device and the communication module,
the method comprising:
- setting, by the processor, the logger device in a first low-power mode where the environmental related parameter is measured by the sensing device and where the resulting environmental related data is stored in the storage medium, where in the low-power mode the communication module communicates with an external data processing device with at least one first-time frequency by means of temporarily setting the logger device to a first higher-energy mode during the communication with the external data processing device,
wherein the method further comprises:
- detecting if an event is sensed by the sensing device, where in case an event is sensed:
- adjusting, by the processor, the logger device to a second higher energy mode and:
   ∘ checking if the logger device is to be set to a transport mode, where in case the checking results in that the logger device is to be set to a transport mode,
   ∘ setting the logger device to a transport mode and adjusting the communication frequency with the external data processing device to a second-time frequency, the second-time frequency being larger than the first-time frequency.

Thus, by adjusting the logger device from being in the first low-power mode, which may be sleep-mode, to the second higher energy mode, which may be understood as "wake-up" mode, when such an invent is sensed, the number of unnecessary "wake-up's" of the logger device may be reduced or avoided and therefore the power use of the logger device. Thus, instead of e.g. once-day fixed wake-up frequency the wake-up frequency may e.g. be once every seven days. Thus, if no such event is detected there will be no wake-up until this 7 days period lapses. By reducing the frequency of this energy consuming process, the power usage of the power source in the logger device is reduced greatly meaning that despite e.g. several weeks or months storage before the transport from the origin location to the destination location the charging of the logger device will only have changed insignificantly. It should however be noted that it is important that there is some wake-up frequency present, simply to indicate the status of the logger device is working, e.g. to indicate the power charge, the temperature, and simply to show that the logger device is working properly.

The step of communicating with the external data processing device with at least one first-time frequency may be single communication frequency where the logger device wakes up e.g. once every 7 days to communication with the external data processing device, but this temporal wake-up mode may last in some instances around 60 seconds, depending on environmental conditions such as the signal strength.

The term asset may according to the present disclosure be understood as any type of goods such as medicine, food, or beverages, that may be packed into packaging material such as box, cardboard box, or any type of packaging material or means, that may even be placed into container, where the asset is subsequently transported by any type of transport means, such as, but not limited to, aircraft, any type of vehicle, vessel, drone device etc., i.e. any means that is capable of transporting to asset from the origin destination to the final destination, where during this transport, the logger device communicates with the external data processing device in real time the position of the asset and at least one measured environmental related data measured by the sensing device or devices.

In an embodiment, the at least one first-time frequency is selected from two or more gradually decreasing frequencies until a minimum first-time pre-defined frequency is reached. This may be the scenario where the logger device has just arrived at the origin location (e.g. warehouse of the customer) after a transport from the service center, where it was fully charged. The fact that it can be very variable how long the logger device (logger devices, there are typically thousands or tens or even hundreds of thousands of logger devices at such warehouses) will be there until it is used and put into transport mode and the actual transport starts may vary from being several hours, up to days, weeks or even months. Thus, it may be beneficial to operate this at least one first-time frequencies in several steps, starting with e.g. a first wake up frequency being ½ day, then 1 day, then 2 days, then 6 days and have 2 weeks or even more the lowest wake-up frequency because it is more likely than not that the logger device will be used within few hours or days.

The transport mode may be in a form of a pending message from the external data processing device side, that may be transmitted to the logger device, where the message may e.g. contain information about coordinates of the origin and destination location of the asset, details about environmental related parameters to monitor, such as that the temperature is the environmental related parameter to monitor, and various boundaries such as maximum and/or minimum allowable temperature, the way of how to start the logger device (e.g. manual) etc.. Other information may geofence radius at the origin and destination location. This should of course not be construed as being limited to temperature, but as will be discussed in more details later, environmental parameters such as humidity, air pressure etc. may also be defined in this message.

In an embodiment, the method further comprises, in case the checking results in that the logger device is not to be set to a transport mode:
- adjusting the logger device to a second low-power mode and adjusting the communication frequency with the external data processing device to at least one third-time frequency, the at least one third-time frequency being lower than the second-time frequency.

In an embodiment, the at least one third-time frequency is the same as the at least one first-time frequency.

In an embodiment, the at least one third-time frequency is selected from two or more gradually decreasing frequencies until a minimum pre-defined third-time frequency is reached. This may be of particular relevance if an event, e.g. vibration, is detected to follow up on it to make sure that this was e.g. just a one-time vibration because of e.g. accidental movement of the box, or if this is a first step in placing the logger device in actual transport mode.

In an embodiment, the resulting environmental related data is selected from:
- acceleration data such as vibration,
- air pressure data,
- light intensity data,
- temperature data,
- humidity data,
- a combination of one or more of the above.

In an embodiment, the step of adjusting the logger device to the second higher energy mode and checking if the logger device is to be set to a transport mode comprises checking via a communication network such as 2G, 3G, 4G, 5G cellular network if an asset order for the logger device is pending or not. The communication module may in an embodiment comprise a modem and where the step of adjusting the logger device to the second higher energy mode comprises adjusting the modem from being in a low-power mode or be switched off to a higher-power mode where the modem communicates with the communication network.

In an embodiment, the first higher-energy mode is the same as the second higher-energy mode. This may as an example be the modem is turned on to communicate with the communication network.

In an embodiment, the communication module comprises a wireless sniffing module configured to identify presence of wireless network(s), wherein the method further comprises, prior to the step adjusting the logger device to the second higher energy mode:
identifying presence of wireless network(s) and compare the identified network(s) to previously identified network(s), where in case of at least partially match between the identified network(s) to the previously identified network(s) the logger device is remained in the low energy mode. In an embodiment, in case of non-match between the identified network(s) to the previously identified network(s) the logger device, said step of adjusting the logger device to the second higher energy mode is performed.

The energy required to activate such a wireless sniffing module such as a Wi-Fi sniffer, is much less than adjusting the logger device to the second higher energy mode where e.g. the communication module can communicate with cellular network. This means that such a low power intermediate step results in a further power savings of the power source. Therefore, in scenario where e.g. a person lifts or accidentally bumps into an empty box (detected as a vibration) to be used for transport the asset with an associated logger device at the origin location (e.g. a warehouse) the logger device will not fully wake-up because the sniffing module will notice that the box is still at the location where it should be. In an embodiment, this sniffing feature might be repeated several times, e.g. every 30 minutes for the next 6 hours, to ensure that the empty box is not leaving the origin location.

The term transport mode may according to the present disclosure be understood as a another mode of operating the logger device, such as, but not limited to, to measure one or more of said environmental related parameters more frequently and/or communicating the resulting measured environmental related data with the external data processing device along with the position of the asset with a pre-defined higher frequency, but this may e.g. be done every hour, but where the measurement may be performed every 10 minutes, meaning that every hour a single coordinate location is transmitted together with 6 measurement data such as temperature measurements and/or an average value of the 6 measurements. This frequency may also depend on the type of transport, such as if the transport is a car, ship, aircraft etc..

In an embodiment, the step of setting the logger device to the transport mode is performed automatically, such as via the external data processing device, which may e.g. according to the present disclosure be understood a cloud platform solution.

In an embodiment, the automatic setting comprises using a pre-defined geofence boundary distance from the origin location of the asset to automatically trigger the automatic setting. This may be based on utilizing the received coordinate position at the origin location where e.g. when the asset is x km away from the origin location the transport mode may be triggered automatically.

In an embodiment, the resulting environmental related data comprises acceleration data such as a vibration of the asset measured by an accelerometer, wherein the step of automatically adjusting the logger device to transport mode is performed after measured acceleration/vibrations remain within a defined acceleration/vibration interval for a pre-defined time period thus indicating a consistency in the measured acceleration/vibrations. This might e.g. be a scenario where the asset is in a transport vehicle where after some time, after detecting a similar vibration for some time exceeding the pre-defined time period, the transport mode is automatically started.

In one embodiment, the method further comprises detecting if the logger device is in vicinity or onboard of an aircraft by means of checking by the communication module if an aviation related aircraft signal, such as Automatic Dependent Surveillance-Broadcast (ADS-B) signal, is received, where in case such an aircraft signal is received and preferably also a detected vibration the asset is automatically registered as being onboard of an aircraft and the logger device is adjusted to a transport mode. This may be done by a receiver suitable to detect the aviation related aircraft signal, but such a receiver may as an example be a TV-tuner.

Based on the above, starting such an asset automatically instead of manually makes the overall process of starting such transport more user friendly and efficient, and moreover avoids possible human failures in forgetting to set the logger device in a transport mode.

In an embodiment, the resulting environmental related data comprises ambience air pressure at or around the asset measured by a barometer, wherein the step of automatically adjusting the logger device to transport mode is performed after measured air pressure difference exceeds a pre-defined limit and remains such over a pre-defined time period thus indicating a consistency in the measured air pressure difference. This may as an example be the case where the asset is in an aircraft. The logger device and thus the asset may automatically identify that they are on board of an aircraft and the logger device may thus be set automatically to transport mode, instead of said manual starting.

In one embodiment, the event is an interrupt condition alert signal configured to alert the processor to interrupt the currently executed first low-power mode and transferring it to the second higher energy mode. Such an interrupt signal may generally be emitted by hardware or software when a process or an event needs immediate attention. In this case, it may be sudden increase in light intensity or increase in vibration, without these measuring devices having to measure on a regular basis. Accordingly, a solution is provided enabling triggering the event in a highly energy beneficial manner.

In another embodiment, the event is sensed by means of identifying, by the processor, if there is a deviation in the measured environmental related data from previous measured environmental related data that exceeds a pre-defined deviation limit.

In an embodiment, the first low-power mode is the same as the second low-power mode.

The logger device is preferably a multi-use logger device where e.g. the power source comprises re-chargeable batterie(s).

In a second aspect of the invention, the present disclosure relates to a wireless logger device configured to monitor an environmental related parameter of an asset while the asset is transported from an origin location to a destination location, where the logger device comprises:
- a power source for powering the logger device,
- a storage medium,
- a sensing device for sensing an environmental related parameter of the asset,
- a communication module,
- a processor for operating the power source, the storage medium, the sensing device and the communication module,

wherein the processor is configured to set the communication module in a first low-power mode where the environmental related parameter is measured by the sensing device and where the resulting environmental related data is stored in the storage medium, where in the low-power mode the communication module communicates with an external data processing device with at least one first-time frequency by means of temporarily setting the logger device to a first higher-energy mode during the communication with the external data processing device,
wherein the processor is operable connected to the sensing device and the communication module and is further configured to, in case an event is sensed by the sensing device, to adjust the communication module and thus the logger device to a second higher energy mode, where in the second higher energy mode, to check if the logger device is to be set to a transport mode, where in case the checking results in that the logger device is to be set to a transport mode, set the logger device to a transport mode and adjust the communication frequency with the external data processing device to a second-time frequency, the second-timer frequency being larger than the first-time frequency,
where in case the checking results in that the logger device is not to be set to a transport mode,
the processor is further configured to adjust the logger device to a second low-power mode and adjust the communication frequency with the external data processing device to at least one third-time frequency, the at least one third-time frequency being lower than the second-time frequency.

In an embodiment, the sensing device comprises a temperature sensor for measuring temperature of the asset and/or an accelerometer for measuring acceleration data such as vibration and/or light sensor for measuring light intensity, and/or barometer for measuring air pressure.

Since the temperature is commonly one of the most critical environmental parameters during the transport, it may not be that relevant to measure the temperature on a regular basis prior to starting the transport as it is commonly done today while the logger devices are stored in warehouses prior to transport, but instead it may be relevant to measure the vibrations and/or light intensity so as enable said event detection, e.g. sudden increase in vibration and/or light intensity. Thus, to ensures a further power saving of the logger device prior to transport, one or both of accelerometer sensor and the light intensity sensor are turned on or partially turned on but the temperature sensor is turned off, when the detected event(s) includes acceleration such as vibration and/or light intensity.

In a third aspect of the invention, the present disclosure relates to a system is provided for operating a wireless logger device where the logger device is configured to monitor an environmental related parameter of an asset while the asset is transported from an origin location to a destination location, where the logger device comprises:
- a power source for powering the logger device,
- a storage medium,
- a sensing device for sensing an environmental related parameter of the asset,
- a communication module,
- a processor for operating the power source, the storage medium, the sensing device and the communication module,
the system comprising:
- an external data processing device configured to instruct the processor to set the logger device in a first low-power mode where the environmental related parameter is measured by the sensing device and where the resulting environmental related data is stored in the storage medium, where in the low-power mode the communication module communicates with the external data processing device with at least one first-time frequency by means of temporarily setting the logger device to a first higher-energy mode during the communication with the external data processing device,
wherein the sensing device is configured to sense if an event is detected in the logger device, where in case an event is sensed, the processor adjusts logger device to a second higher energy mode, where in the second higher energy mode:
∘ checking if the logger device is to be set to a transport mode, where in case the checking results in that the logger device is to be set to a transport mode,
∘ setting the logger device to a transport mode and adjusting the communication frequency with the external data processing device to a second-time frequency, the second-timer frequency being larger than the first-time frequency.

In an embodiment, the processor is further configured to, in case the checking results in that the logger device is not to be set to a transport mode, to adjust the logger device to a second low-power mode and adjusting the communication frequency with the external data processing device to at least one third-time frequency, the at least one third-time frequency being lower than the second-time frequency.

In general the various aspects of the disclosure may be combined and coupled in any way possible within the scope of the disclosure.

These and other aspects, features and/or advantages of the disclosure will be apparent from and elucidated with reference to the embodiments described hereinafter.

### BRIEF DESCRIPTION OF THE DRAWINGS

Embodiments of the invention will be described, by way of example only, with reference to the drawings, in which
Figure 1 illustrates schematically a common cycle of using a logger device according to the present disclosure in a real time global supply chain monitoring for monitoring an asset while transporting the asset from an origin location to a destination location,
Figure 2 shows an embodiment of a logger device according to the present disclosure
Figure 3 shown an embodiment of a flowchart of a method according to the present disclosure for operating a wireless logger device discussed in relation to figure 2,
Figures 4 and 5 illustrate graphically two scenarios of the logger device discussed in relation to figures 2 and 3 when the logger device is placed in e.g. a warehouse prior to be in actual transport, and
Figure 6 depicts graphically a scenario where two events are detected, E1 and E2, during a lower power mode of the logger device.

### DESCRIPTION OF EMBODIMENTS

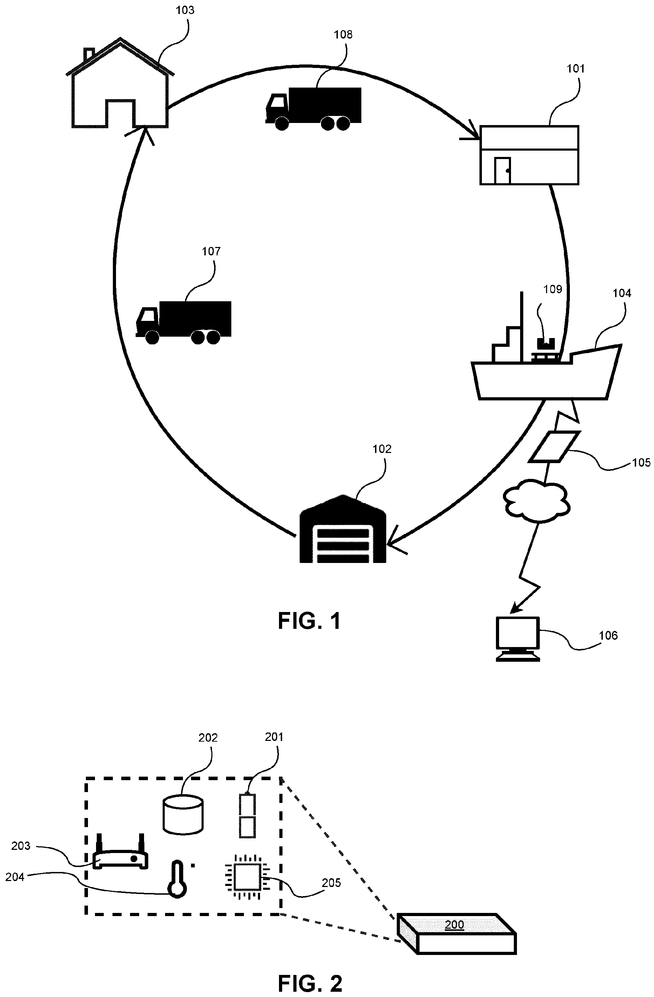

Figure 1 illustrates schematically a common cycle of using logger device 200, preferably a multi-use logger device, according to the present disclosure as illustrated in figure 2, in a real time global supply chain monitoring for monitoring an asset 109 while transporting the asset (e.g. medicine or food and/or beverages) from an origin location 101, which may be a warehouse of a customer, to a destination location 102. As illustrated in this example, the transporting is done by a vessel 104, but could of course be any type of a transport, e.g. a vehicle, aircraft etc., that regularly sends environmental related data 105 such as the temperature of the asset and/or acceleration data and/or vibration etc. along with the location of the asset to an external data processing device 106, that may be any type of e.g. a cloud-platform system.

As will be discussed in more details later, such a logger device 200 comprises a power source for powering the logger device 201 such as a re-chargeable battery, a storage medium 202, a sensing device 204 for sensing an environmental related parameter of the asset 109, a communication module 203, and a processor 205 for operating the power source, the storage medium, the sensing device and the communication module.

After arriving at the destination location where the monitoring is completed, the logger device is transported by a transport means 107 from the destination location 102 to service center 103, where the logger device is returned and charged and, in some instances, re-calibrated, in particularly the temperature sensor, associated to the logger devices.

Subsequently, the logger device is transported back to the origin location 101 where it is stored until the next transport starts.

The path from the destination location 102 to the service center 103 is not important for the customer because the transport is completed. Also, the transport from the service center 103 to the origin location 101 is often relative short and the logger devices are in a low power mode during the transport and therefore this path is also not critical.

It should be noted that in praxis hundreds or thousands of such logger devices according to the present disclosure are transported to the service center 103 and from the service center to the origin location 101.

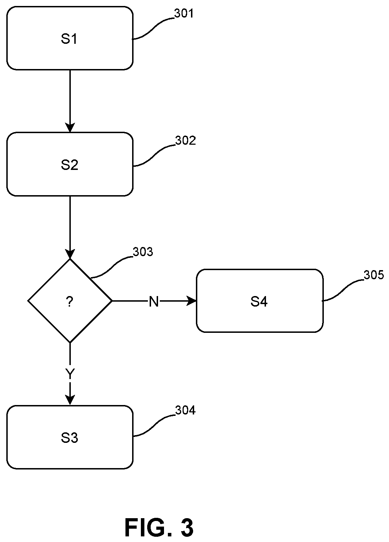

Figure 3 shows an embodiment of a flowchart of a method according to the present invention for operating a wireless logger device 200 discussed in relation to figure 2, where the logger device 200 is configured to monitor an environmental related parameter of an asset in real-time while the asset is transported from the origin location 101 to the destination location 102. The term "real-time" in such a supply chain monitoring (meaning e.g. monitoring while transporting the asset from origin location to a harbor, from harbor to the vessel, and the vessel to the harbor at the destination location) as depicted in figure 1 means sending location data of the asset (the logger device) and measured environmental data such as temperature of the asset on a regular basis, where e.g. the temperature may be measured every 10 minutes, and where the temperature of the asset along with the location of the asset may be sent to the external data processing device 106 every one hour, if the signal strength is sufficient (e.g. if there is a 3G or 4G connection available).

The method according to the present disclosure is particularly relevant for operating the logger while it is stored at the origin location 101 and until it enters a transport mode where it is associated to the asset, e.g. such as the one illustrated graphically in figure 1.

In a first step (S1) 301, the logger device is set in a first low-power mode where the environmental related parameter such as temperature of the asset, vibration, light intensity, humidity, or a combination thereof, is measured and stored in the storage medium. In this low-power mode the communication module communicates with an external data processing device with at least one first-time frequency by means of temporarily setting the logger device to a first higher-energy mode during the communication with the external data processing device. As an example, the first-time frequency may be 5 days meaning that the logger device is in a lower power mode where it has sufficient energy to measure one or more of said environmental related parameters and store the resulting data in the storage medium 202. This low-power mode is then temporarily changed to a first higher-energy mode, where in this first higher-energy mode the logger device has sufficient energy to enable the communication module to connect to e.g. a cellular network (if there is sufficient signal) where the measured data along with the position of the logger device is transmitted. The position may as an example be determined using cellular triangulation. This temporal change to the first-higher energy mode may be just for a minute or so. This is more or less to give information about the status of the logger device, in particularly the battery charge, the environmental condition such the temperature in the warehouse.

In an embodiment, the at least one first-time frequency is selected from two or more gradually decreasing frequencies until a minimum first-time pre-defined frequency is reached. This may be beneficial since in most cases the logger device is used within few hours or days, meaning the logger device is more like "stand-by" to receive a transport message from the external processing device 106 and be ready for transport. Thus, instead of going directly into said 5 days wake-up mode, it may do it in several steps, e.g. starting with few hour wake-up frequency, then 1 day, 2 day, and finally 5 days.

In a second step (S2) 302, a detection step is performed by the sensing device 204 where it is detected if an event is sensed. The event may be an interrupt condition alert signal configured to alert the processor of the logger device to interrupt the currently executed first low-power mode. This may as an example be the case where a logger device is suddenly moved where a certain vibration above a pre-defined ranged is suddenly detected by e.g. an accelerometer, and/or if light intensity is detected that goes above a certain light intensity range. If such an event is detected, the logger device is transferred to a second higher energy mode. The second higher energy mode may be the same energy mode as the first higher energy mode discussed previously, namely an energy mode sufficient to adjust the communication module such that the logger device is capable of communicating with e.g. a cellular network, such as 2G, 3G, 4G and 5G.

In a third step (S3) 303, the logger device checks, while the logger device is in the second higher energy mode, if it is to be set to a transport mode or not, or is to be prepared to starting a transport mode. This may be done by checking if there is a shipping message is pending from the external data processing device 106. The message may e.g. contain information about coordinates of the origin and destination location of the asset, details about environmental related parameters to monitor, such as which environmental related parameter to monitor, and various boundaries such as maximum/minimum allowable ranges of the environmental related parameter. Other information may include geofence radius at the origin and destination location.

In a third step (S3) 304, if the checking positively confirms that the logger device is to be set to a transport mode, the shipping message with all the associated information is downloaded by the logger device and the logger device is ready meaning e.g. all said information to be set to a transport mode are stored in the logger device. At this moment, or after the transport has actually started, the communication frequency is adjusted to a second-time frequency that is larger than the first-time frequency. The shipping message includes amongst other information about how the transport mode is to be started, e.g. if it is a manual operation where an operator starts the logger device manually via e.g. "On" operation on the logger device, or if it is to be done automatically.

In a fourth step (S4) 305, if the checking does not confirm that the logger device is to be set to a transport mode, the logger device is adjusted to a second low-power mode, which may be the same as the first low-power mode, and the communication frequency with the external data processing device is adjusted to at least one third-time frequency, which may be identical to the first communication frequency. In an embodiment, the at least one third-time frequency is selected from two or more gradually decreasing frequencies until a minimum pre-defined third-time frequency is reached. This may be beneficial as a safety measure to make sure that the detected event was a "false alarm" since it may take minutes and maybe up to few hours to ensure that this was false alarm. This may also depend on if the detected event is just a one-time event, e.g. a sudden increase in a vibration and subsequently no vibration, which would point towards that the detected event is not a start of a shipment, whereas several subsequent such events might be an indication that the logger device is being prepared to an actual transport which would then be identified via said two or more gradually decreasing frequencies.

In an embodiment, the method comprises an intermediate step prior to setting the logger device in the second higher energy mode, where the communication module comprises a wireless sniffing module such as Wi-Fi sniffer, configured to identify presence of wireless network(s), whereby prior to the step adjusting the logger device to the second higher energy mode, the method comprises identifying presence of wireless network(s) and compare the identified network(s) to previously identified network(s), where in case of at least partially match between the identified network(s) to the previously identified network(s) the logger device is remained in the low energy mode. This may be repeated several times to ensure that the detected network(s) are still present. As an example, if the logger device is accidentally moved which causes a vibration, it might be possible that this logger device is being moved e.g. from said warehouse (origin location) and is being prepared to be placed in an asset. Thus, it may be possible that it will take some time until the logger device is outside of the warehouse. Accordingly, doing this check few times ensured that this kind of a scenario is detected. If this frequency is let's say four times, every ten minutes, and each time the presence of the wireless network(s) is detected, that will confirm that the logger device is still in the warehouse and is not to be placed in an asset.

However, in case of non-match between the identified network(s) to the previously identified network(s) the logger device, said step of adjusting the logger device to the second higher energy mode is performed.

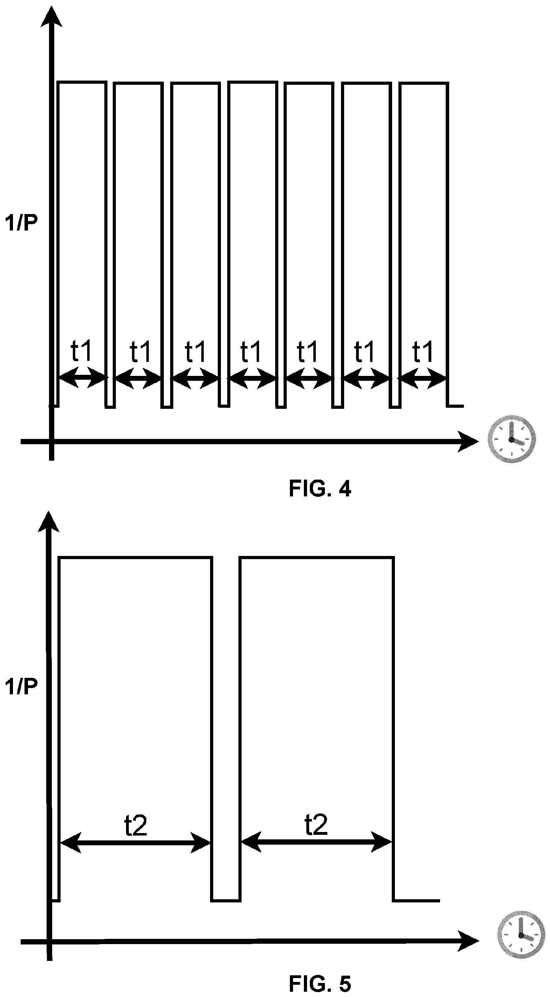

Figures 4 and 5 illustrate graphically two scenarios of the logger device discussed in relation to figures 2 and 3 when the logger device is placed in e.g. a warehouse prior to be in actual transport, where figure 4 depicts higher wake-up frequency, e.g. once every day, compared to lower wake-up frequency in figure 5, e.g. once every five days. The y-axis depicts 1/Power (P) and the horizontal axis is time. The upper horizontal portions reflect low power mode, and the lower horizontal lines depict higher energy mode where the logger device is e.g. connected to a cellular network. The tail portion of the graphs illustrate where the logger device is in a higher energy mode and is e.g. downloading the transport message and the relevant information comprised in the message. The message may be in different format, such as, but not limited to, a text message, email etc.. These two different wake-up modes illustrate graphically how energy consuming it is if the logger devices wake-up's with higher frequency as illustrated in figure 4 compared to figure 5.

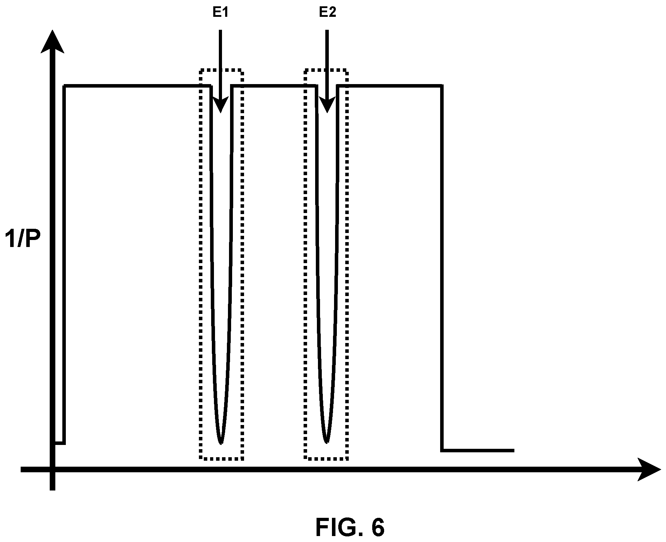

Figure 6 depicts graphically a scenario where two events are detected, E1 and E2, during the lower power mode of the logger device. As already mentioned, such events may be cause due to e.g. interruptions where the logger device may be e.g. be associated to an empty box, where the box is accidentally moved cause sudden increase in vibrations, or the box may be opened causing a sudden increase in light intensity. These events trigger an adjustment to said second higher energy mode for checking e.g. via a cellular network if the logger device is to be set to a transport mode. In this scenario, no transport message is pending meaning the logger device is adjusted back to the previous low power mode.

The invention is defined by the features of independent claims 1, 13 and 15. Preferred embodiments are set out in the dependent claims. Examples, aspects, and embodiments in the present disclosure do not necessarily fall within the scope of the claims.

## Claims

1. A method of minimizing energy consumption of a power source used in powering a wireless logger device (200, 201) configured to monitor an environmental related parameter of an asset during storage of the asset and before the transport of the asset from an origin location to a destination location, where the logger device (200, 201) comprises:
• a power source for powering the logger device (200, 201),
• a storage medium (202),
• a sensing device (204) for sensing an environmental related parameter of the asset,
• a communication module,
• a processor for operating the power source, the storage medium (202), the sensing device (204) and the communication module,
the method comprising:
• setting, by the processor, the logger device (200, 201) in a first low-power mode where the environmental related parameter is measured by the sensing device (204) and where the resulting environmental related data is stored in the storage medium (202), where in the low-power mode the communication module communicates with an external data processing device with at least one first-time frequency by means of temporarily setting the logger device (200, 201) to a first higher-energy mode during the communication with the external data processing device,
wherein the method further comprises:
• detecting if an event is sensed by the sensing device (204), **characterised in that** in case an event is sensed:
• adjusting, by the processor, the logger device (200, 201) to a second higher energy mode and:
∘ checking if the logger device (200, 201) is to be set to a transport mode, where in case the checking results **in that** the logger device (200, 201) is to be set to a transport mode,
∘ setting the logger device (200, 201) to a transport mode and adjusting the communication frequency with the external data processing device to a second-time frequency, the second-time frequency being larger than the first-time frequency.

2. The method according to claim 1, wherein the transport mode is a mode where the actual transport starts from an origin location to a destination location.

3. The method according to claim 1 or 2, wherein the transport mode comprises increasing a frequency by which the environment related parameters are measured.

4. The method according to any of the preceding claims, wherein the transport mode comprises communicating the resulting measured environmental related data with the external data processing device along with the position of the asset with a pre-defined frequency which is higher than the first-time frequency and second-time frequency.

5. The method according to claim 4, wherein the pre-defined higher frequency is further dependent on the type of transport.

6. The method according to any of the preceding claims, further comprising in case the checking results in that the logger device (200, 201) is not to be set to a transport mode:
• adjusting the logger device (200, 201) to a second low-power mode and adjusting the communication frequency with the external data processing device to at least one third-time frequency, the at least one third-time frequency being lower than the second-time frequency.

7. The method according to any of the preceding claims, wherein the step of adjusting the logger device (200, 201) to the second higher energy mode and checking if the logger device (200, 201) is to be set to a transport mode comprises checking via a communication network such as cellular network if an asset order for the logger device (200, 201) is pending or not.

8. The method according to any of the preceding claims, wherein the communication module comprises a wireless sniffing module configured to identify presence of wireless network(s), wherein the method further comprises, prior to the step adjusting the logger device (200, 201) to the second higher energy mode:
identifying presence of wireless network(s) and compare the identified network(s) to previously identified network(s), where in case of at least partially match between the identified network(s) to the previously identified network(s) the logger device (200, 201) is remained in the low energy mode.

9. The method according to claim 8, wherein in case of non-match between the identified network(s) to the previously identified network(s) the logger device (200, 201), said step of adjusting the logger device (200, 201) to the second higher energy mode is performed.

10. The method according to any of the preceding claims, wherein the resulting environmental related data is selected from:
• acceleration and/or vibration data,
• air pressure data,
• light intensity data,
• temperature data,
• humidity data,
• a combination of one or more of the above.

11. The method according to any of the preceding claims, wherein the at least one first-time frequency is selected from two or more gradually decreasing frequencies until a minimum first-time pre-defined frequency is reached.

12. The method according to any of the preceding claims, wherein the at least one third-time frequency is selected from two or more gradually decreasing frequencies until a minimum pre-defined third-time frequency is reached.

13. A wireless logger device (200, 201) configured to monitor an environmental related parameter of an asset while the asset is transported from an origin location to a destination location, where the logger device (200, 201) comprises:
• a power source for powering the logger device (200, 201),
• a storage medium (202),
• a sensing device (204) for sensing an environmental related parameter of the asset,
• a communication module,
• a processor for operating the power source, the storage medium (202), the sensing device (204) and the communication module,
wherein the processor is configured to minimize the energy consumption of the power source used in powering the wireless logger device (200, 201) during storage of the asset and before the transport of the asset by means of setting the communication module in a first low-power mode where the environmental related parameter is measured by the sensing device (204) and where the resulting environmental related data is stored in the storage medium (202), where in the low-power mode the communication module communicates with an external data processing device with at least one first-time frequency by means of temporarily setting the logger device (200, 201) to a first higher-energy mode during the communication with the external data processing device,
wherein the processor is operable connected to the sensing device (204), **characterized in that** the communication module is further configured to, in case an event is sensed by the sensing device (204), to adjust the communication module and thus the logger device (200, 201) to a second higher energy mode, where in the second higher energy mode, to check if the logger device (200, 201) is to be set to a transport mode, where in case the checking results **in that** the logger device (200, 201) is to be set to a transport mode, set the logger device (200, 201) to a transport mode and adjust the communication frequency with the external data processing device to a second-time frequency, the second-timer frequency being larger than the first-time frequency,
where in case the checking results **in that** the logger device (200, 201) is not to be set to a transport mode,
the processor is further configured to adjust the logger device (200, 201) to a second low-power mode and adjust the communication frequency with the external data processing device to at least one third-time frequency, the at least one third-time frequency being lower than the second-time frequency.

14. The logger device (200, 201) according to claim 13, wherein the sensing device (204) comprises a temperature sensor for measuring temperature of the asset and/or an accelerometer for measuring acceleration data such as vibration and/or light sensor for measuring light intensity where to ensure a further power saving of the logger device (200, 201) prior to transport, one or both of accelerometer sensor and the light intensity sensor are turned on or partially turned on but the temperature sensor is turned off.

15. A system minimizing energy consumption of a power source used in powering a wireless logger device (200, 201) where the logger device (200, 201) is configured to monitor an environmental related parameter of an asset during storage of the asset and before the transport of the asset from an origin location to a destination location, where the logger device (200, 201) comprises:
• a power source for powering the logger device (200, 201),
• a storage medium (202),
• a sensing device (204) for sensing an environmental related parameter of the asset,
• a communication module,
• a processor for operating the power source, the storage medium (202), the sensing device (204) and the communication module,
the system comprising:
• an external data processing device configured to instruct the processor to set the logger device (200, 201) in a first low-power mode where the environmental related parameter is measured by the sensing device (204) and where the resulting environmental related data is stored in the storage medium (202), where in the low-power mode the communication module communicates with the external data processing device with at least one first-time frequency by means of temporarily setting the logger device (200, 201) to a first higher-energy mode during the communication with the external data processing device,
wherein the sensing device (204) is configured to sense if an event is detected in the logger device (200, 201), **characterized in that** in case an event is sensed, the processor adjusts logger device (200, 201) to a second higher energy mode, where in the second higher energy mode:
∘ checking if the logger device (200, 201) is to be set to a transport mode, where in case the checking results **in that** the logger device (200, 201) is to be set to a transport mode,
∘ setting the logger device (200, 201) to a transport mode and adjusting the communication frequency with the external data processing device to a second-time frequency, the second-timer frequency being larger than the first-time frequency.

## Patentansprüche

1. Verfahren zur Minimierung eines Energieverbrauchs einer Stromquelle, die zur Stromversorgung einer drahtlosen Logger-Vorrichtung (200, 201) verwendet wird, wobei die Logger-Vorrichtung dazu ausgebildet ist, einen umgebungsbezogenen Parameter eines Sachguts während einer Lagerung des Sachguts und vor einem Transport des Sachguts von einem Ursprungsort zu einem Zielort zu überwachen, wobei die Logger-Vorrichtung (200, 201) umfasst:
• eine Stromquelle zur Stromversorgung der Logger-Vorrichtung (200, 201),
• ein Speichermedium (202),
• eine Sensorvorrichtung (204) zum Erfassen eines umgebungsbezogenen Parameters des Sachguts,
• ein Kommunikationsmodul,
• einen Prozessor zum Betreiben der Stromquelle, des Speichermediums (202), der Sensorvorrichtung (204) und des Kommunikationsmoduls,
wobei das Verfahren umfasst:
• Versetzen, durch den Prozessor, der Logger-Vorrichtung (200, 201) in einen ersten Niedrigverbrauchsmodus, in dem der umgebungsbezogene Parameter durch die Sensorvorrichtung (204) gemessen wird und die resultierenden umgebungsbezogenen Daten in dem Speichermedium (202) gespeichert werden, wobei in dem Niedrigverbrauchsmodus das Kommunikationsmodul mit einer externen Datenverarbeitungsvorrichtung mit mindestens einer ersten Häufigkeit kommuniziert, indem die Logger-Vorrichtung (200, 201) während der Kommunikation mit der externen Datenverarbeitungsvorrichtung temporär in einen ersten Modus mit höherer Energie versetzt wird,
wobei das Verfahren ferner umfasst:
• Erkennen, ob ein Ereignis durch die Sensorvorrichtung (204) erfasst wird, **dadurch gekennzeichnet, dass**, falls ein Ereignis erfasst wird:
• Einstellen, durch den Prozessor, der Logger-Vorrichtung (200, 201) auf einen zweiten Modus mit höherer Energie, und:
∘ Überprüfen, ob die Logger-Vorrichtung (200, 201) in einen Transportmodus versetzt werden soll, wobei, falls die Überprüfung ergibt, dass die Logger-Vorrichtung (200, 201) in einen Transportmodus versetzt werden soll,
∘ Versetzen der Logger-Vorrichtung (200, 201) in einen Transportmodus und Einstellen einer Kommunikationshäufigkeit mit der externen Datenverarbeitungsvorrichtung auf eine zweite Häufigkeit, wobei die zweite Häufigkeit größer als die erste Häufigkeit ist.

2. Verfahren nach Anspruch 1, wobei der Transportmodus ein Modus ist, in dem der tatsächliche Transport von einem Ursprungsort zu einem Zielort beginnt.

3. Verfahren nach Anspruch 1 oder 2, wobei der Transportmodus ein Erhöhen einer Häufigkeit umfasst, mit der die umgebungsbezogenen Parameter gemessen werden.

4. Verfahren nach einem der vorhergehenden Ansprüche, wobei der Transportmodus ein Kommunizieren der resultierenden umgebungsbezogenen Daten mit der externen Datenverarbeitungsvorrichtung zusammen mit der Position des Sachguts mit einer vordefinierten Häufigkeit umfasst, die höher ist als die erste Häufigkeit und die zweite Häufigkeit.

5. Verfahren nach Anspruch 4, wobei die vordefinierte höhere Häufigkeit ferner von der Art des Transports abhängig ist.

6. Verfahren nach einem der vorhergehenden Ansprüche, ferner umfassend, falls die Überprüfung ergibt, dass die Logger Vorrichtung (200, 201) nicht in einen Transportmodus versetzt werden soll:
• Einstellen der Logger Vorrichtung (200, 201) in einen zweiten Niedrigverbrauchsmodus und Einstellen der Kommunikationshäufigkeit mit der externen Datenverarbeitungsvorrichtung auf mindestens eine dritte Häufigkeit, wobei die mindestens eine dritte Häufigkeit niedriger ist als die zweite Häufigkeit.

7. Verfahren nach einem der vorhergehenden Ansprüche, wobei der Schritt des Einstellens der Logger Vorrichtung (200, 201) auf den zweiten Modus mit höherer Energie und des Überprüfens, ob die Logger Vorrichtung (200, 201) in einen Transportmodus versetzt werden soll, ein Überprüfen über ein Kommunikationsnetzwerk, wie beispielsweise ein Mobilfunknetz, ob ein Sachgutauftrag für die Logger Vorrichtung (200, 201) aussteht oder nicht, umfasst.

8. Verfahren nach einem der vorhergehenden Ansprüche, wobei das Kommunikationsmodul ein drahtloses Sniffing Modul umfasst, das dazu ausgebildet ist, ein Vorhandensein eines oder mehrerer drahtloser Netzwerke zu identifizieren, wobei das Verfahren ferner vor dem Schritt des Einstellens der Logger Vorrichtung (200, 201) auf den zweiten Modus mit höherer Energie umfasst:
Identifizieren des Vorhandenseins eines oder mehrerer drahtloser Netzwerke und Vergleichen der identifizierten Netzwerke mit zuvor identifizierten Netzwerken, wobei im Falle einer zumindest teilweisen Übereinstimmung zwischen den identifizierten Netzwerken und den zuvor identifizierten Netzwerken die Logger Vorrichtung (200, 201) in dem Niedrigenergiemodus verbleibt.

9. Verfahren nach Anspruch 8, wobei im Falle einer Nichtübereinstimmung zwischen den identifizierten Netzwerken und den zuvor identifizierten Netzwerken der Schritt des Einstellens der Logger Vorrichtung (200, 201) auf den zweiten Modus mit höherer Energie durchgeführt wird.

10. Verfahren nach einem der vorhergehenden Ansprüche, wobei die resultierenden umgebungsbezogenen Daten ausgewählt sind aus:
• Beschleunigungs- und/oder Vibrationsdaten,
• Luftdruckdaten,
• Lichtintensitätsdaten,
• Temperaturdaten,
• Feuchtigkeitsdaten,
• einer Kombination aus einem oder mehreren der vorstehenden.

11. Verfahren nach einem der vorhergehenden Ansprüche, wobei die mindestens eine erste Häufigkeit aus zwei oder mehr allmählich abnehmenden Häufigkeiten ausgewählt ist, bis eine minimale vordefinierte erste Häufigkeit erreicht ist.

12. Verfahren nach einem der vorhergehenden Ansprüche, wobei die mindestens eine dritte Häufigkeit aus zwei oder mehr allmählich abnehmenden Häufigkeiten ausgewählt ist, bis eine minimale vordefinierte dritte Häufigkeit erreicht ist.

13. Drahtlose Logger Vorrichtung (200, 201), die dazu ausgebildet ist, einen umgebungsbezogenen Parameter eines Sachguts zu überwachen, während das Sachgut von einem Ursprungsort zu einem Zielort transportiert wird, wobei die Logger Vorrichtung (200, 201) umfasst:
• eine Stromquelle zur Stromversorgung der Logger Vorrichtung (200, 201),
• ein Speichermedium (202),
• eine Sensorvorrichtung (204) zum Erfassen eines umgebungsbezogenen Parameters des Sachguts,
• ein Kommunikationsmodul,
• einen Prozessor zum Betreiben der Stromquelle, des Speichermediums (202), der Sensorvorrichtung (204) und des Kommunikationsmoduls,
wobei der Prozessor dazu ausgebildet ist, einen Energieverbrauch der Stromquelle, die zur Stromversorgung der drahtlosen Logger Vorrichtung (200, 201) verwendet wird, während einer Lagerung des Sachguts und vor einem Transport des Sachguts zu minimieren, indem das Kommunikationsmodul in einen ersten Niedrigverbrauchsmodus versetzt wird, in dem der umgebungsbezogene Parameter durch die Sensorvorrichtung (204) gemessen wird und die resultierenden umgebungsbezogenen Daten in dem Speichermedium (202) gespeichert werden, wobei in dem Niedrigverbrauchsmodus das Kommunikationsmodul mit einer externen Datenverarbeitungsvorrichtung mit mindestens einer ersten Häufigkeit kommuniziert, indem die Logger Vorrichtung (200, 201) während der Kommunikation mit der externen Datenverarbeitungsvorrichtung temporär in einen ersten Modus mit höherer Energie versetzt wird,
wobei der Prozessor operativ mit der Sensorvorrichtung (204) verbunden ist, **dadurch gekennzeichnet, dass** das Kommunikationsmodul ferner dazu ausgebildet ist, falls ein Ereignis durch die Sensorvorrichtung (204) erfasst wird, das Kommunikationsmodul und somit die Logger Vorrichtung (200, 201) auf einen zweiten Modus mit höherer Energie einzustellen, wobei in dem zweiten Modus mit höherer Energie überprüft wird, ob die Logger Vorrichtung (200, 201) in einen Transportmodus versetzt werden soll, wobei, falls die Überprüfung ergibt, dass die Logger Vorrichtung (200, 201) in einen Transportmodus versetzt werden soll, die Logger Vorrichtung (200, 201) in einen Transportmodus versetzt wird und die Kommunikationshäufigkeit mit der externen Datenverarbeitungsvorrichtung auf eine zweite Häufigkeit eingestellt wird, wobei die zweite Häufigkeit größer ist als die erste Häufigkeit,
wobei, falls die Überprüfung ergibt, dass die Logger Vorrichtung (200, 201) nicht in einen Transportmodus versetzt werden soll,
der Prozessor ferner dazu ausgebildet ist, die Logger Vorrichtung (200, 201) auf einen zweiten Niedrigverbrauchsmodus einzustellen und die Kommunikationshäufigkeit mit der externen Datenverarbeitungsvorrichtung auf mindestens eine dritte Häufigkeit einzustellen, wobei die mindestens eine dritte Häufigkeit niedriger ist als die zweite Häufigkeit.

14. Logger Vorrichtung (200, 201) nach Anspruch 13, wobei die Sensorvorrichtung (204) einen Temperatursensor zum Messen einer Temperatur des Sachguts und/oder einen Beschleunigungssensor zum Messen von Beschleunigungsdaten wie etwa Vibrationen und/oder einen Lichtsensor zum Messen einer Lichtintensität umfasst, wobei, um eine weitere Energieeinsparung der Logger Vorrichtung (200, 201) vor dem Transport sicherzustellen, einer oder beide von Beschleunigungssensor und Lichtsensor eingeschaltet oder teilweise eingeschaltet sind, während der Temperatursensor ausgeschaltet ist.

15. System zur Minimierung eines Energieverbrauchs einer Stromquelle, die zur Stromversorgung einer drahtlosen Logger Vorrichtung (200, 201) verwendet wird, wobei die Logger Vorrichtung (200, 201) dazu ausgebildet ist, einen umgebungsbezogenen Parameter eines Sachguts während einer Lagerung des Sachguts und vor einem Transport des Sachguts von einem Ursprungsort zu einem Zielort zu überwachen, wobei die Logger Vorrichtung (200, 201) umfasst:
• eine Stromquelle zur Stromversorgung der Logger Vorrichtung (200, 201),
• ein Speichermedium (202),
• eine Sensorvorrichtung (204) zum Erfassen eines umgebungsbezogenen Parameters des Sachguts,
• ein Kommunikationsmodul,
• einen Prozessor zum Betreiben der Stromquelle, des Speichermediums (202), der Sensorvorrichtung (204) und des Kommunikationsmoduls,
wobei das System umfasst:
• eine externe Datenverarbeitungsvorrichtung, die dazu ausgebildet ist, den Prozessor anzuweisen, die Logger Vorrichtung (200, 201) in einen ersten Niedrigverbrauchsmodus zu versetzen, in dem der umgebungsbezogene Parameter durch die Sensorvorrichtung (204) gemessen wird und die resultierenden umgebungsbezogenen Daten in dem Speichermedium (202) gespeichert werden, wobei in dem Niedrigverbrauchsmodus das Kommunikationsmodul mit der externen Datenverarbeitungsvorrichtung mit mindestens einer ersten Häufigkeit kommuniziert, indem die Logger Vorrichtung (200, 201) während der Kommunikation mit der externen Datenverarbeitungsvorrichtung temporär in einen ersten Modus mit höherer Energie versetzt wird,
wobei die Sensorvorrichtung (204) dazu ausgebildet ist, zu erfassen, ob ein Ereignis in der Logger Vorrichtung (200, 201) erkannt wird, **dadurch gekennzeichnet, dass** falls ein Ereignis erfasst wird, der Prozessor die Logger Vorrichtung (200, 201) auf einen zweiten Modus mit höherer Energie einstellt, wobei in dem zweiten Modus mit höherer Energie:
∘ Überprüfen, ob die Logger Vorrichtung (200, 201) in einen Transportmodus versetzt werden soll, wobei, falls die Überprüfung ergibt, dass die Logger Vorrichtung (200, 201) in einen Transportmodus versetzt werden soll,
∘ Versetzen der Logger Vorrichtung (200, 201) in einen Transportmodus und Einstellen der Kommunikationshäufigkeit mit der externen Datenverarbeitungsvorrichtung auf eine zweite Häufigkeit, wobei die zweite Häufigkeit größer ist als die erste Häufigkeit.

## Revendications

1. Procédé de minimisation de consommation d'énergie d'une source d'alimentation utilisée pour alimenter un dispositif enregistreur sans fil (200, 201) configuré pour surveiller un paramètre lié à l'environnement d'un actif pendant le stockage de l'actif et avant le transport de l'actif d'un emplacement d'origine à un emplacement de destination, dans lequel le dispositif enregistreur (200, 201) comprend :
• une source d'alimentation pour alimenter le dispositif enregistreur (200, 201),
• un support de stockage (202),
• un dispositif de détection (204) pour détecter un paramètre lié à l'environnement de l'actif,
• un module de communication,
• un processeur pour faire fonctionner la source d'alimentation, le support de stockage (202), le dispositif de détection (204) et le module de communication,
le procédé comprenant :
• le réglage, par le processeur, du dispositif enregistreur (200, 201) dans un premier mode de basse puissance dans lequel le paramètre lié à l'environnement est mesuré par le dispositif de détection (204) et dans lequel les données liées à l'environnement résultantes sont stockées dans le support de stockage (202), dans lequel, dans le mode de basse puissance, le module de communication communique avec un dispositif de traitement de données externe avec au moins une fréquence de premier temps au moyen d'un réglage provisoire du dispositif enregistreur (200, 201) dans un premier mode d'énergie supérieure pendant la communication avec le dispositif de traitement de données externe,
dans lequel le procédé comprend en outre :
• la détection si un événement est détecté par le dispositif de détection (204), **caractérisé par**, dans le cas dans lequel l'événement est détecté :
• l'ajustement, par le processeur, du dispositif enregistreur (200, 201) dans un deuxième mode d'énergie supérieure et :
∘ la vérification si le dispositif enregistreur (200, 201) doit être réglé dans un mode de transport et, dans le cas dans lequel la vérification résulte en ce que le dispositif enregistreur (200, 201) doit être réglé dans un mode de transport,
∘ le réglage du dispositif enregistreur (200, 201) dans un mode de transport et l'ajustement de la fréquence de communication avec le dispositif de traitement de données externe à une fréquence de deuxième temps, la fréquence de deuxième temps étant plus grande que la fréquence de premier temps.

2. Procédé selon la revendication 1, dans lequel le mode de transport est un monde dans lequel le transport réel commence à partir d'un emplacement d'origine vers un emplacement de destination.

3. Procédé selon la revendication 1 ou 2, dans lequel le mode de transport comprend l'augmentation d'une fréquence à laquelle les paramètres liés à l'environnement sont mesurés.

4. Procédé selon l'une quelconque des revendications précédentes, dans lequel le mode de transport comprend la communication des données liées à l'environnement mesurées résultantes avec le dispositif de traitement de données externe et de la position de l'actif à une fréquence prédéfinie qui est supérieure à la fréquence de premier temps et à la fréquence de deuxième temps.

5. Procédé selon la revendication 4, dans lequel la fréquence supérieure prédéfinie dépend en outre du type de transport.

6. Procédé selon l'une quelconque des revendications précédentes, comprenant en outre, dans le cas dans lequel la vérification résulte en ce que le dispositif enregistreur (200, 201) ne doit pas être réglé dans un mode de transport :
• l'ajustement du dispositif enregistreur (200, 201) dans un deuxième mode de basse puissance et l'ajustement de la fréquence de communication avec le dispositif de traitement de données externe à au moins une fréquence de troisième temps, l'au moins une fréquence de troisième temps étant inférieure à la fréquence de deuxième temps.

7. Procédé selon l'une quelconque des revendications précédentes, dans lequel l'étape de l'ajustement du dispositif enregistreur (200, 201) dans le deuxième mode d'énergie supérieure et la vérification si le dispositif enregistreur (200, 201) doit être réglé dans un mode de transport comprend la vérification via un réseau de communication comme un réseau cellulaire si un ordre d'actif pour le dispositif enregistreur (200, 201) est en attente ou pas.

8. Procédé selon l'une quelconque des revendications précédentes, dans lequel le module de communication comprend un module de reniflage sans fil configuré pour identifier une présence d'un ou plusieurs réseaux sans fil, dans lequel le procédé comprend en outre, avant l'étape de l'ajustement du dispositif enregistreur (200, 201) dans le deuxième mode d'énergie supérieure :
l'identification d'une présence d'un ou plusieurs réseaux sans fil et la comparaison du ou des réseaux identifiés à un ou plusieurs réseaux précédemment identifiés, dans lequel, dans le cas dans lequel les un ou plusieurs réseaux identifiés correspondent au moins partiellement aux un ou plusieurs réseaux précédemment identifiés, le dispositif enregistreur (200, 201) est maintenu dans le mode de basse énergie.

9. Procédé selon la revendication 8, dans lequel, dans le cas dans lequel les un ou plusieurs réseaux identifiés ne correspondent pas aux un ou plusieurs réseaux précédemment identifiés, ladite étape de l'ajustement du dispositif enregistreur (200, 201) dans le deuxième mode d'énergie supérieure est réalisée.

10. Procédé selon l'une quelconque des revendications précédentes, dans lequel les données liées à l'environnement résultantes sont sélectionnées parmi :
• des données d'accélération et/ou de vibration,
• des données de pression d'air,
• des données d'intensité lumineuse,
• des données de température,
• des données d'humidité,
• une combinaison d'une ou plusieurs de ce qui précède.

11. Procédé selon l'une quelconque des revendications précédentes, dans lequel l'au moins une fréquence de premier temps est sélectionnée parmi deux fréquences progressivement décroissantes ou plus jusqu'à ce qu'une fréquence de premier temps prédéfinie minimale soit atteinte.

12. Procédé selon l'une quelconque des revendications précédentes, dans lequel l'au moins une fréquence de troisième temps est sélectionnée parmi deux fréquences progressivement décroissantes ou plus jusqu'à ce qu'une fréquence de troisième temps prédéfinie minimale soit atteinte.

13. Dispositif enregistreur sans fil (200, 201) configuré pour surveiller un paramètre lié à l'environnement d'un actif pendant que l'actif est transporté d'un emplacement d'origine à un emplacement de destination, dans lequel le dispositif enregistreur (200, 201) comprend :
• une source d'alimentation pour alimenter le dispositif enregistreur (200, 201),
• un support de stockage (202),
• un dispositif de détection (204) pour détecter un paramètre lié à l'environnement de l'actif,
• un module de communication,
• un processeur pour faire fonctionner la source d'alimentation, le support de stockage (202), le dispositif de détection (204) et le module de communication,
dans lequel le processeur est configuré pour minimiser la consommation d'énergie de la source d'alimentation utilisée pour alimenter le dispositif enregistreur sans fil (200, 201) pendant le stockage de l'actif et avant le transport de l'actif au moyen du réglage du module de communication dans un premier mode de basse puissance dans lequel le paramètre lié à l'environnement est mesuré par le dispositif de détection (204) et dans lequel les données liées à l'environnement résultantes sont stockées dans le support de stockage (202), dans lequel, dans le mode de basse puissance, le module de communication communique avec un dispositif de traitement de données externe avec au moins une fréquence de premier temps au moyen d'un réglage provisoire du dispositif enregistreur (200, 201) dans un premier mode d'énergie supérieure pendant la communication avec le dispositif de traitement de données externe,
dans lequel le processeur est relié fonctionnellement au dispositif de détection (204), **caractérisé en ce que** le module de communication est en outre configuré pour, dans le cas dans lequel un événement est détecté par le dispositif de détection (204), ajuster le module de communication et ainsi le dispositif enregistreur (200, 201) dans un deuxième mode d'énergie supérieure ; dans le deuxième mode d'énergie supérieure, vérifier si le dispositif enregistreur (200, 201) doit être réglé dans un mode de transport ; dans le cas dans lequel la vérification résulte **en ce que** le dispositif enregistreur (200, 201) doit être réglé dans un mode de transport, régler le dispositif enregistreur (200, 201) dans un mode de transport et ajuster la fréquence de communication avec le dispositif de traitement de données externe à une fréquence de deuxième temps, la fréquence de deuxième temps étant plus grande que la fréquence de premier temps,
dans lequel, dans le cas dans lequel la vérification résulte **en ce que** le dispositif enregistreur (200, 201) ne doit pas être réglé dans un mode de transport,
le processeur est en outre configuré pour ajuster le dispositif enregistreur (200, 201) dans un deuxième mode de basse puissance et ajuster la fréquence de communication avec le dispositif de traitement de données externe à au moins une fréquence de troisième temps, l'au moins une fréquence de troisième temps étant inférieure à la fréquence de deuxième temps.

14. Dispositif enregistreur (200, 201) selon la revendication 13, dans lequel le dispositif de détection (204) comprend un capteur de température pour mesurer une température de l'actif et/ou un accéléromètre pour mesurer des données d'accélération tel qu'un capteur de vibration et/ou de lumière pour mesurer une intensité lumineuse, dans lequel, pour assurer une économie d'énergie supplémentaire du dispositif enregistreur (200, 201) avant le transport, l'un ou les deux de l'accéléromètre et du capteur d'intensité lumineuse sont mis sous tension ou sont partiellement mis sous tension mais le capteur de température est mis hors tension.

15. Système de minimisation de consommation d'énergie d'une source d'alimentation utilisée pour alimenter un dispositif enregistreur sans fil (200, 201), dans lequel le dispositif enregistreur (200, 201) est configuré pour surveiller un paramètre lié à l'environnement d'un actif pendant le stockage de l'actif et avant le transport de l'actif d'un emplacement d'origine à un emplacement de destination, dans lequel le dispositif enregistreur (200, 201) comprend :
• une source d'alimentation pour alimenter le dispositif enregistreur (200, 201),
• un support de stockage (202),
• un dispositif de détection (204) pour détecter un paramètre lié à l'environnement de l'actif,
• un module de communication,
• un processeur pour faire fonctionner la source d'alimentation, le support de stockage (202), le dispositif de détection (204) et le module de communication,
le procédé comprenant :
• un dispositif de traitement de données externe configuré pour instruire au processeur de régler le dispositif enregistreur (200, 201) dans un premier mode de basse puissance dans lequel le paramètre lié à l'environnement est mesuré par le dispositif de détection (204) et dans lequel les données liées à l'environnement résultantes sont stockées dans le support de stockage (202), dans lequel, dans le mode de basse puissance, le module de communication communique avec le dispositif de traitement de données externe avec au moins une fréquence de premier temps au moyen d'un réglage provisoire du dispositif enregistreur (200, 201) dans un premier mode d'énergie supérieure pendant la communication avec le dispositif de traitement de données externe,
dans lequel le dispositif de détection (204) est configuré pour détecter si un événement est détecté dans le dispositif enregistreur (200, 201), **caractérisé en ce que**, dans le cas dans lequel un événement est détecté, le processeur ajuste le dispositif enregistreur (200, 201) dans un deuxième mode d'énergie supérieure, et, dans le deuxième mode d'énergie supérieure :
∘ vérifie si le dispositif enregistreur (200, 201) doit être réglé dans un mode de transport et, dans le cas dans lequel la vérification résulte **en ce que** le dispositif enregistreur (200, 201) doit être réglé dans un mode de transport,
∘ règle le dispositif enregistreur (200, 201) dans un mode de transport et ajuste la fréquence de communication avec le dispositif de traitement de données externe à une fréquence de deuxième temps, la fréquence de deuxième temps étant plus grande que la fréquence de premier temps.
